(19) Europäisches Patentamt
European Patent Office
Office européen des brevets

(11) Publication number: 0 572 034 A2

# (12) EUROPEAN PATENT APPLICATION

(21) Application number: 93108694.6

(51) Int. Cl.5: C08F 210/02

(22) Date of filing: 28.05.93

(30) Priority: 29.05.92 JP 138679/92
29.05.92 JP 138547/92

(43) Date of publication of application:
01.12.93 Bulletin 93/48

(84) Designated Contracting States:
BE DE ES FR GB IT NL SE

(71) Applicant: IDEMITSU KOSAN COMPANY LIMITED
1-1, Marunouchi 3-chome
Chiyoda-ku
Tokyo(JP)

(72) Inventor: Toshimi, Nikaido
c/0 Idemitsu Petro. Co.Ltd
1-1, Anesakikaigan,
Ichihara-shi, Chiba-ken(JP)
Inventor: Tatsuya Housaki
c/0 Idemitsu Petro. Co.Ltd
1-1, Anesakikaigan,
Ichihara-shi, Chiba-ken(JP)
Inventor: Junichi Matsumoto
c/0 Idemitsu Kosan. Co.Ltd
1280, Kamiizumi ,
Sodegara-shi, Chiba-ken(JP)
Inventor: Takuji Okamoto
c/0 Idemitsu Kosan. Co.Ltd
1280, Kamiizumi ,
Sodegara-shi, Chiba-ken(JP)
Inventor: Masami Watanabe
c/0 Idemitsu Kosan. Co.Ltd
1280, Kamiizumi ,
Sodegara-shi, Chiba-ken(JP)
Inventor: Nobuhide Ishihara
c/0 Idemitsu Kosan. Co.Ltd
1280, Kamiizumi ,
Sodegara-shi, Chiba-ken(JP)

(74) Representative: VOSSIUS & PARTNER
Postfach 86 07 67
D-81634 München (DE)

## (54) Ethylenic copolymer and ethylenic copolymer composition.

(57) There are disclosed an ethylenic copolymer having a specific range for each of melt index (MI), density, a molecular weight distribution as defined by the weight-average molecular weight (Mw)/number-average molecular weight (Mn) ratio, width of dependence of number of branches on molecular weight, orthodichlorobenzene (ODCB) soluble portion and maximum melting point (Tm(max)) as measured with a differential scanning calorimeter (DSC); and a composition comprising as principal components, (a) the above ethylenic copolymer and (b) an ethylen/$\alpha$-olefin copolymer having a specific range for each of MI, density, number of branches and Tm(max). The above-disclosed ethylenic copolymer is minimized in the contents of low and high branching components in spite of its having a wide distribution of molecular weight and is well balanced among the excellent properties in moldability, transparency and heat sealability. Consequently, it can be effectively utilized for films, packing materials, heat insulating materials and foaming materials.

Also, the above-disclosed composition is surpassingly balanced among transparency, heat sealing temperature, tear strength, etc. and is extremely useful in a variety of fields, especially packaging field.

EP 0 572 034 A2

The present invention relates to ethylenic copolymers, and more particularly, to ethylenic copolymers lessened in low branching components and high branching components in spite of its wide distribution of molecular weight. It further relates to compositions comprising the above-mentioned ethylenic copolymers, and more particularly, to ethylenic copolymer compositions excellent in the balance among transparency, heat sealability and tear strength.

As a general rule, linear low density polyethylene (LLDPE) is superior to high pressure processed low density polyethylene (HPLDPE) with regard to mechanical strength such as tensile strength, impact resistance and rigidity and physical properties such as environmental stress cracking resistance (ESCR) and heat resistance. With the development of the Cumminsky catalyst in recent years, which has enabled the production of a resin that is extremely narrow in both distribution of branching degree and distribution of molecular weight and excellent in transparency and heat sealability, the demand for such a resin has increased in the fields of film, sheet, blow molding and cable, especially in the field of packing material.

However, the resins produced by the use of the Cumminsky catalyst have involved the problem regarding their molding properties since the narrow distribution of their molecular weight increases resin pressure, deteriorates extruding properties and lowers melt elasticity, thus failing to stabilize the molten resin. As countermeasures against the problem, the development of multistage polymerization process and improvements of the catalyst are carried out at the present time, but satisfactory effects have not yet been exerted.

Thus, it is an object of the present application to overcome the above disadvantages of the prior art.

This object has been achieved by the surprising finding that the above problem is settled by the application of an ethylenic copolymer having a definite melt index (MI), density, molecular weight distribution, width of dependence of branching degree on molecular weight, orthodichlorobenzene (ODCB) soluble portion and maximum melting point (Tm(max)) as measured with a differential scanning calorimeter (DSC) within respective specified ranges.

The resin to be employed as films in the field of packing is required to be not only excellent in transparency and heat sealability but also be well balanced between heat seal temperature and tear strength and the like. In the aforesaid field there have heretofore been disclosed (1) a polypropylene film (2) a blended film of LLDPE and HPLDPE (JP-A-59-149941 (1984), (3) a blended film of LLDPE and ethylene/vinyl acetate (EVA) copolymer, and (4) a blended film of LLDPE and a special polyolefin (JP-A-3-66341 (1991), JP-A-52-39741 (1977) and JP-A-57-34145 (1982)).

However, the films (1), (2), (3) and (4) are poor in productivity with high heat seal temperature and narrow range of the molecular weight distribution; in heat sealing strength, hot tack and rigidity; in heat resisting strength, oil resistance and rigidity; and in tear strength with unfavorable balance between tear strength in machine direction and transverse direction, respectively.

It is therefore a further object of the present application to overcome the latter disadvantages of the prior art.

That object has been achieved by a definite composition comprising the above-mentioned ethylenic copolymer.

Particularly, it is an object of the present invention to provide an ethylenic copolymer which contains only small amounts of low branching components and high branching components in spite of its wide distribution of the molecular weight and is excellent in moldability as well as transparency and heat sealability and in particular, linear low density polyethylene improved in such a manner.

In order to attain the aforesaid object, the present invention provides an ethylenic copolymer having a melt index (MI) of 0.1 to 30 g/10 min, a density of 0.880 to 0.940 g/ml, a molecular weight distribution as defined by the ratio-weight-average molecular weight (Mw)/number-average molecular weight (Mn) of 2 to 6, a width for dependence of number of branches on molecular weight of 0 to 5/1000 carbons, an orthodichlorobenzene (ODCB) soluble portion of 10% or less by weight and a maximum melting point (Tm-(max)) as measured with a differential scanning calorimeter (DSC) of 120 °C or less.

In detail, the other object of the present invention is to provide an ethylenic copolymer composition which is surpassingly balanced among such properties as transparency, heat sealability, heat sealing temperature, tear strength and the like, usable in a variety of field and particularly useful in the field of packing.

In order to achieve the aforementioned object, the present invention provides an ethylenic copolymer composition which comprises (a) 40 to 5% by weight of an ethylenic copolymer having a melt index (MI) of 0.1 to 30 g/10min a density of 0.880 to 0.940 g/ml, a molecular weight distribution as defined by the ratio-weight-average molecular weight (Mw)/number-average molecular weight (Mn) of 2 to 6, a width for dependence of number of branches on molecular weight of 0 to 5/1000 carbons, an orthodichlorobenzene (ODCB) soluble portion of 10% or less by weight and a (Tm(max)) as measured with a differential scanning

calorimeter (DSC) of 120 °C or less; and (b) 60 to 95% by weight of an ethylene/α-olefin copolymer having a melt index (MI) of 0.1 to 25 g/10min, a density of 0.900 to 0.940 g/ml, a number of branches of 10 to 40/1000 carbons and a maximum melting point (Tm(max)) as measured with a differential scanning calorimeter (DSC) of 110 to 130 °C.

The ethylenic copolymer according to the present invention has the physical properties as described in the following items (1) to (6).

(1) Melt index (MI)

The measuring conditions for MI are in accordance with JIS K-7210. The MI of the ethylenic copolymer of the present invention is 0.1 to 30 g/10min, preferably 0.3 to 25 g/10min. An MI of less than 0.1 g/10min results in poor flow characteristics and difficulty in molding, whereas more than 30 g/10min leads to deteriorated moldability due to decrease in impact resistance and melt viscosity of the resin to be produced.

(2) Density

The measuring conditions for density are in accordance with JIS K-6760 by the density gradient tube method without annealing.

The density of the ethylenic copolymer of the present invention is 0.880 to 0.940 g/ml, preferably 0.890 to 0.930 g/ml. A density of less than 0.880 will cause the problem of limpness and tackiness of molding, whereas more than 0.940 g/ml gives rise to deteriorated transparency and heat sealability of film.

(3) Molecular weight distribution (Mw/Mn)

The measuring conditions for Mw/Mn include the use of a GPC M150C (produced by Waters Corporation) connected to a differential viscometer MODEL 110 (produced by Viscotek Corporation) as measuring instruments, along with two columns Shodex UT-806L and 2 mg/ml of a sample, in which trichlorobenzene (TCB) was used as the solvent, at 135 °C, a flow rate of 1 ml/min and an injection amount of 200 μg. The absolute molecular weight (Mw and Mn) and molecular weight distribution were obtained by the use of the above-mentioned measuring instruments under the aforestated conditions.

The Mw/Mn of the ethylenic copolymer of the present invention is 2 to 6, preferably 2.5 to 4. An Mw/Mn of less than 2 brings about increased resin pressure, deteriorated extrusion characteristics, lowered melt elasticity, unstabilized molten-resin and worsened moldability, whereas more than 6 results in failure to attain favorable physical properties because of unreasonable increase in both high molecular components and low molecular components.

(4) Width of dependence of number of branches on molecular weight.

The measuring conditions for such width for dependence include the use of GPC M150C (produced by Waters Corporation), FTIR (produced by Perkins Elmer Corporation, Model 1760) for measuring degree of branching together with two columns Shodex UT-806L and 2 mg/ml of sample, in which trichlorobenzene (TCB) was used as the solvent, at 135 °C, a flow rate of 1 ml/min and an injection amount of 200 μg.

The molecular weight distribution was obtained by the use of the above-mentioned measuring instruments under the aforestated conditions and divided into 10 fractions. Thus, the difference between the maximum value and minimum value in the average number of branches in each fraction obtained by the FTIR, that is, the number of branches per each molecular weight distribution was taken as the width for dependence of number of branches on molecular weight, provided that the fractions with a divisional area of 4% or less were cut away.

The width for dependence of the ethylenic copolymer according to the present invention is 0 to 5/1000 carbons, preferably 0 to 4/1000 carbons. In other words, there is not much difference in the number of branches in the copolymer among any fraction of molecular weight, that is, irrespective of the fraction of high or low molecular weight. Saying it differently, the difference in the number of branches between the maximum value and the minimum value is in the range of 0 to 5 per 1000 carbon atoms in the copolymer in any of the molecular weight fractions.

Such a width for dependence exceeding 5 per 1000 carbon atoms induces deteriorated transparency and heat sealability of the film to be produced due to increase in both high branching components and low branching components.

(5) Orthodichlorobenzene (ODCB) soluble portion

A sample of 100 mg was dissolved in 20 ml of ODCB at 135°C and adsorbed on Chromosorb P packed in a column after gradual cooling to 35°C. Then, the column temperature was raised at a constant rate to detect the concentration of the eluted solution with an IR detector. The ratio in concentration (% by weight) of the non-adsorbed components at 35°C to the whole components was obtained as ODCB soluble portion, which is an index indicating the extent of the high branching components and increases with increase in such components.

The ODCB soluble portion of the ethylenic copolymer according to the present invention is 10% by weight or less, preferably 7% by weight or less, and when it exceeds 10% by weight, heat sealability of the film is lowered.

(6) Maximum melting point (Tm(max)) as measured with a differential scanning calorimeter (DSC) --

With regard to the measuring conditions for Tm(max), 10 mg/ml of a sample was maintained at 190°C for 3 min, cooled to 25°C at a temperature fall rate of 10°C/min, maintained at 25°C for 3 min and then heated to 140°C at a temperature rise rate of 10°C/min to obtain Tm(max), which is an index indicating the extent of the low branching components and increases with increase in such components. As the measuring instrument, DSC-7 series TAS (produced by Perkin Elmer Corp.) was used.

The Tm(max) of the ethylenic copolymer according to the present invention is 120°C or lower, preferably 118°C or lower, and when it exceeds 120°C, transparency and heat sealability of the film are lowered.

The ethylenic copolymer of the present invention can be produced by a variety of processes by the use of ethylene, ethylene with a least one α-olefin and/or a non-conjugated diene as starting raw material. Specifically, ethylene may be used alone or in combination with at least one other α-olefin or at least one non-conjugated diene or in combination with both at least one other α-olefin and at least one non-conjugated diene.

Examples of the α-olefin other than ethylene include straight-chain monoolefins exemplified by propylene; 1-butene; 1-hexene; 1-octene; 1-nonene; 1-decene; 1-undecene; and 1-dodecene, branched monoolefins exemplified by 3-methylbutene-1; 3-methylpentene-1; 4-methylpentene-1; 2-ethylhexene-1; and 2,2,4-trimethylpentene-1 and monoolefins replaced with a benzene ring such as styrene.

Examples of the non-conjugated dienes, which are preferably straight chain or branched non-conjugated dienes each having 6 to 20 carbon atoms include 1,5-hexadiene; 1,6-heptadiene; 1,7-octadiene; 1,8-nonadiene; 1,9-decadiene; 2,5-dimethyl-1,5-hexadiene; and 1,4-dimethyl-4-tert-buty-2,6-heptadiene, polyenes such as 1,5,9-decatriene and exomethylene series cyclic diene such as 5-ethylidene-2-norbornene.

The catalyst to be used is not limited but is exemplified by a variety of catalysts including, for example, (1) a catalyst comprising as principal components, (A) a transition metal compound, (B) a compound capable of reacting with a transition metal compound to form an ionic complex and (C) an organoaluminum compound; (2) a catalyst comprising as principal components, (D) a transition metal compound having a transition metal selected from the group IVB of the Periodic Table and the aforesaid component (B), at least one of the components (D) and (B) being supported on (E) a carrier; and (3) a catalyst comprising as principal components, the above-mentioned components (D) and (B), at least one of the components (D) and (B) being supported on (E) a carrier and (C) an organoaluminum compound.

As the transition metal compound of the component (A), there are usable the transition metal compounds each having a transition metal belonging to the group IVB, VB, VIB, VIIB or VIII of the Periodic Table, which is exemplified desirably by titanium, zirconium, hafnium, chromium, manganese, nickel, palladium and platinum and particularly disirably by zirconium, hafnium, titanium, nickel and palladium.

A variety of such transition metal compounds are available, among which are favorably usable the compound having a transiton metal belonging to the group IVB or VIII of the Periodic Table, especially a transition metal selected from those belonging to the group IVB thereof, that is, titanium, zirconium and hafnium (component (D)). In particular, the preferable transition metal compounds are those represented by the general formula (I), (II), (III) or (IV) and derivatives thereof.

$CpMR^1_aR^2_bR^3_c$ (I)

$Cp_2MR^1_aR^2_b$ (II)

$(Cp\text{-}A_e\text{-}Cp)MR^1{}_aR^2{}_b$ (III)

$MR^1{}_aR^2{}_bR^3{}_cR^4{}_d$ (IV)

wherein M is a transition metal belonging to the group IVB of the Periodic Table, i.e. Ti, Zr or Hf; Cp is an unsaturated cyclic hydrocarbon radical or an unsaturated chain hydrocarbon radical such as a cyclopentadienyl group, substituted cyclopentadienyl group, indenyl group, substituted indenyl group, tetrahydroindenyl group, substituted tetrahydroindenyl group, fluorenyl group or substituted fluorenyl group; $R^1$, $R^2$, $R^3$ and $R^4$, independently of one another, are each a ligand such as a $\sigma$-bonding ligand, a chelating ligand and a Lewis base, specifically exemplified as a $\sigma$-bonding ligand by a hydrogen atom, an oxygen atom, a halogen atom, an alkyl group having 1 to 20 carbon atoms, an alkoxy group having 1 to 20 carbon atoms, an aryl group, an alkylaryl group, an arylalkyl group each having 6 to 20 carbon atoms, an acyloxy group having 1 to 20 carbon atoms, an allyl group, a substituted allyl group and a substituent containing a silicon atom and, as a chelating ligand, by an acetylacetonato group and a subsituted acetylacetonato group; A is crosslinkage by covalent bond; a, b, c and d, independently of one another, are each an integer from 0 to 4; e is an integer from 0 to 6; at least two out of $R^1$, $R^2$, $R^3$ and $R^4$ may together form a ring; and when Cp has a substituent, the substituent is preferably an alkyl group having 1 to 20 carbon atoms.

Examples of the substituted cyclopentadienyl groups in the above-mentioned formulae (I) to (III) include a methylcyclopentadienyl group; ethylcyclopentadienyl group; isopropylcyclopentadienyl group; 1,2-dimethylcyclopentadienyl group; tetramethylcyclopentadienyl group; 1,3-dimethylcyclopentadienyl group; 1,2,3-trimethylcyclopentadienyl group; 1,2,4-trimethylcyclopentadienyl group; pentamethylcyclopentadienyl group and trimethylsilylcyclopentadienyl group. Specific examples of $R^1$, $R^2$, $R^3$ and $R^4$ in the aforesaid formulae (I) to (IV) include F, Cl, Br and I as the halogen atom; a methyl, ethyl, n-propyl, isopropyl, n-butyl, octyl and 2-ethylhexyl group as alkyl groups having 1 to 20 carbon atoms; a methoxy, ethoxy, propoxy, butoxy and phenoxy group as alkoxy groups having 1 to 20 carbon atoms; a phenyl, tolyl, xylyl and benzyl group as aryl, alkylaryl or arylalkyl groups each having 6 to 20 carbon atoms; the heptadecylcarbonyloxy group as an acyloxy group having 1 to 20 carbon atoms; a trimethylsilyl and (trimethylsilyl)methyl group as substituents containing a silicon atom; as Lewis base, ethers such as dimethyl ether, diethyl ether and tetrahydrofuran; thioethers such as tetrahydrothiophene; esters such as ethylbenzoate; nitriles such as acetonitrile and benzonitrile; amines such as trimethylamine, triethylamine, tributylamine, N,N-dimethylaniline, pyridine, 2,2'-bipyridine and phenanthroline; phosphines,such as triethylphosphine and triphenylphosphine; unsaturated hydrocarbons, such as ethylene, butadien, 1-pentene, isoprene, pentadiene, 1-hexene and derivatives thereof; unsaturated cyclic hydrocarbon such as benzene, toluene, xylene, cycloheptatriene, cyclooctadiene, cyclooctatriene, cyclooctatetraene and derivatives thereof. Examples of A, that is, crosslinkage by covalent bond in the above formula III, include a methylene, dimethylmethylene, ethylene, 1,1'-cyclohexylene, dimethylsilylene, dimethylgermylene and dimethylstannylene crosslinkage.

Specific examples of the compound represented by the general formula (I) include pentamethylcyclopentadienyltrimethyltitanium, pentamethylcyclopentadienyltriphenyltitanium, pentamethylcyclopentadienyltribenzyltitanium, pentamethylcyclopentadienyltrichlorotitanium, pentamethylcyclopentadienyltrimethoxytitanium, cyclopentadienyltrimethoxytitanium, cyclopentadienyltriphenyltitanium, cyclopentadienyltribenzyltitanium, cyclopentadienyltrichlorotitanium, cyclopentadienyltrimethoxytitanium, cyclopentadienyldimethylmethoxytitanium, methylcyclopentadienyltirmethyltitanium, methylcyclopentadienyltriphenyltitanium methylcyclopentadienyltribenzyltitanium, methylcyclopenadienyltrichlorotitanium, methylcyclopentadienyldimethylmethoxytitanium, dimethylcyclopentadienyltrichlorotitanium, trimethylcyclopentadienyltrichlorotitanium, trimethylcyclopetnadienyltrimethyltitanium and tetramethylcyclopentadienyltrichlorotitanium.

Specific examples of the compound represented by the general formula (II) include bis-(cyclopentadienyl)dimethyltianium; bis(cyclopentadienyl)diphenyltitanium; bis(cyclopentadienyl)-diethyltianium; bis(cyclopentadienyl)dibenzyltitanium; bis(cyclopentadienyl)dimethoxytianium; bis-(cyclopentadienyl)dichlorotitanium; bis(cyclopentadienyl)dihydrotianium; bis(cyclopentadienyl)-monochlorohydridotitanium; bis(methylcyclopentadienyl)dimethyltitanium; bis(methylcyclopentadienyl)-dichlorotitanium; bis(methylcyclopentadienyl)dibenzyltitanium; bis(pentamethylcyclopentadienyl)-dimethyltitanium; bis(pentamethylcyclopentadienyl)dichlorotitanium; bis(pentamethylcyclopentadienyl)-dibenzylltitanium; bis(pentamethylcyclopentadienyl)chloromethyltitanium; bis(pentamethylcyclopentadienyl)-hydridomethyltitanium; (cyclopentadienyl)(pentamethylcyclopentadienyl)dichlorotitanium; and any of the above-mentioned compounds in which titanium atom is replaced with a zirconium or a hafnium atom.

Specific examples of the compound represented by the formula (III) include ethylenebis(indenyl)-dimethyltitanium; ethylenebis(indenyl)dichlorotitanium; ethylenebis(tetrahydroindenyl)dimethyltitanium;

ethylenebis(tetrahydroindenyl)dichlorotitanium; dimethylsilylenebis(cyclopentadienyl)dimethyltitanium; dimethylsilylenebis(cyclopentadienyl)dichlorotitanium; isopropylidene(cyclopentadienyl)(9-fluorenyl)-dimethyltitanium; isopropylidene(cyclopentadienyl)(9-fluorenyl)dichlorotitanium; phenyl(methyl)methylene (9-fluorenyl)(cyclopentadienyl)dimethyltitanium; diphenylmethylene(cyclopentadienyl)(9-fluorenyl)-dimethyltitanium; ethylene(9-fluorenyl)(cyclopentadienyl)dimethyltitanium; cyclohexalidene(9-fluorenyl)-(cyclopentadienyl)dimethyltitanium; cyclopentylidene(9-fluorenyl)(cyclopentadienyl)dimethyltitanium; cyclobutylidene(9-fluorenyl)(cyclopentadienyl)dimethyltitanium; dimethylsilylene(9-fluorenyl)-(cyclopentadienyl)dimethyltitanium; dimethylsilylenebis(2,3,5-trimethylcyclopentadienyl)dichlorotitanium; dimethylsilylenebis(2,3,5-trimethylcyclopentadienyl)dimethyltitanium; dimethylsilylenebis(indenyl)-dichlorotitanium; any of the above-mentioned compounds in which titanium atom is replaced with a zirconium or a hafnium atom.

Specific examples of the compound represented by the formula (IV) include tetramethyltitanium, tetrabenzyltitanium, tetramethoxytitanium, tetraethoxytitanium, tetrabutoxytitanium, titanium tetrachloride, titanium tetrabromide, butoxytitanium trichloride, butoxytitanium dichloride, bis(2,5-di-tert-butylphenoxy)-dimethyltitanium, bis(2,5-di-tert-butylphenoxy)titanium dichloride, titanium bis(acetylacetonato) and any of the above-mentioned compound in which titanium atom is replaced with a zirconium or a hafnium atom.

Favorably usable titanium compound as the component (A) among those represented by the general formula (III) is the titanium compound having a multidentate ligand in which two substituted or unsubsituted conjugated cyclopentadienyl groups (at least one being substituted cyclopentadienyl group) are bonded to one another via an element selected from the group IVA of the Periodic Table.

Examples of such a compound include compounds represented by the general formula (V) and derivatives thereof

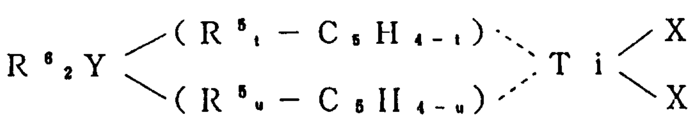

· · · (V)

wherein Y is a carbon atom, silicon atom, germanium atom or tin atom; $R^5{}_t$-$C_5H_{4-t}$ and $R^5{}_u$-$C_5H_{4-u}$ are each a substituted cyclopentadienyl group in which t and u are each an integer from 1 to 4; $R^5$ is a hydrogen atom, silyl group or hydrocarbon radical, and may be the same or different, provided that at least one cyclopentadienyl group has $R^5$ on at least one carbon atom adjacent to the carbon atom bonded to Y; $R^6$ is a hydrogen atom, an alkyl group having 1 to 20 carbon atoms, an aryl group, an alkylaryl group or an arylalkyl group each having 6 to 20 carbon atoms, and may be the same or different; X is a hydrogen atom, a halogen atom, an alkyl group having 1 to 20 carbon atoms, an aryl group, an alkylaryl group or an arylalkyl group each having 6 to 20 carbon atoms or an alkoxyl group having 1 to 20 carbon atoms and may be the same or different.

Examples of the substituted cyclopentadienyl group in the above-mentioned formulae (V) include a methylcyclopentadienyl group; ethylcyclopentadienyl group; isopropylcyclopentadienyl group; 1,2-dimethylcyclopentadienyl group; 1,3-dimethylcyclopentadienyl group; 1,2,3-trimethylcyclopentadienyl group; and 1,2,4-trimethylcyclopentadienyl group.

Specific examples of X include F, Cl, Br and I as the halogen atom; a methyl, ethyl, n-propyl, isopropyl, n-butyl, octyl and 2-ethylhexyl group as alkyl groups having 1 to 20 carbon atoms;a methoxy,ethoxy, propoxy, butoxy and phenoxy group as alkoxy groups having 1 to 20 carbon atoms; phenyl, tolyl, xylyl and benzyl group as aryl, alkylaryl or arylalkyl group each having 6 to 20 carbon atmos.

Specific Examples of $R^6$ include the methyl, ethyl, phenyl, toly, xylyl and benzyl group. Examples of the compounds represented by the general formula (V) include dimethylsilylenebis(2,3,5-trimethylcyclopentadienyl)titanium dichloride and the compound in which titanium atom is replaced with a zirconium atom or a hafnium atom.

As the component (B) of the catalyst in the present invention, there is employed a compound capable of reacting with a transition metal compound to form an ionic complex. The compound is not specifically limited insofar as it is capable of reacting with the (A) transition metal compound to form an ionic complex, but there is preferably used a compound especially a coordination compound comprising a cation and an anion in which a plurality of radicals are bonded to an element.

The compound comprising a cation and an anion in which a plurality of radicals are bonded to an element is exemplified by the compound comprising a cation having an element selected from the groups

IIIB, IVB, VB, VIB, VIIB, VIII, IA, IB, IIA, IIB, IVA and VIIA of the Periodic Table and an anion in which a plurality of radicals are bonded to an element selected from the groups VB, VIB, VII, VIII, IB, IIB, IIIA, IVA and VA of the Periodic Table, specifically by the compound represented by the general formula (VI) or (VII).

$([L^1 -R^7]^{k+})_p([M^3Z^1Z^2---Z^n]^{(n-m)-})_q$ (VI)

$([L^2]^{k+})_p([M^4Z^1Z^2---Z^n]^{(n-m)-})_q$ (VII)

wherein $L^2$ is $M^5$, $R^8R^9M^6$ or $R^{10}{}_3C$ or $R^{11}M^6$; $L^1$ is a Lewis base; $M^3$ and $M^4$ are each an element selected from Groups VB, VIB, VIIB, VIII, IB, IIB, IIIA, IVA and VA preferably IIIA, IVA and VA of the Periodic Table; $M^5$ and $M^6$ are each an element selected from Groups IIIB, IVB, VB, VIB, VIIB, VIII, IA, IB, IIA, IIB and VIIA of the Periodic Table; $Z^1$ to $Z^n$ are each a hydrogen atom, a dialkylamino group, an alkoxy group having 1 to 20 carbon atoms, an aryloxy group having 6 to 20 carbon atoms, an alkyl group having 1 to 20 carbon atoms, an aryl group, an alkylaryl group or an arylalkyl group each having 6 to 20 carbon atoms, a halogen-substituted hydrocarbon radical having 1 to 20 carbon atoms, an acyloxy group having 1 to 20 carbon atoms, an organometalloid group or a halogen atom and at least two of them may combine with each other to form a ring; $R^7$ is a hydrogen atom, an alkyl group having 1 to 20 carbon atoms, an aryl group, an alkylaryl group or an arylalkyl group each having 6 to 20 carbon atoms; $R^8$ and $R^9$ are each a cyclopentadienyl group, a substituted cyclopentadienyl group, an indenyl group or a fluorenyl group; $R^{10}$ is an alkyl group, an aryl group, an alkylaryl group or an arylalkyl group each having 1 to 20 carbon atoms; $R^{11}$ is a macrocyclic ligand such as tetraphenylporphyrin and phthalocyanine; m is the valency of each of $M^3$ and $M^4$, indicating an integer of 1 to 7; n is an integer of 2 to 8; k is the ion valency of each of $[L^1\text{-}R^7]$ and $[L^2]$, indicating an integer of 1 to 7; p is an integer of 1 or more; and $q = (p \times k)/(n - m)$.

Specific examples of the Lewis base represented by $L^1$ include amines such as ammonia, methylamine, aniline, dimethylamine, diethylamine, N-methylaniline, diphenylamine, trimethylamine, triethylamine, tri-n-butylamine, N,N-dimethylaniline, methyldiphenylamine, pyridine, p-bromo-N,N'-dimethylaniline and p-nitro-N,N-dimethylaniline; phosphines such as triethylphosphine, triphenylphosphine and diphenylphosphine; ethers such as dimethylether, diethyl ether, tetrahydrofuran and dioxane; thioethers such as diethyl thioether and tetrahydrothiophene; and esters such as ethylbenzoate.

Specific examples of $M^3$ and $M^4$ include B, Al, Si, P, As, Sb, etc. preferably B and P; those of $M^5$ include Li, Na, Ag, Cu, Br, I, etc.; and those of $M^6$ include Mn, Fe, Co, Ni, Zn, etc. Specific examples of $Z^1$ to $Z^n$ include dialkylamino groups such as dimethylamino and diethylamino, alkoxy groups having 1 to 20 carbon atoms such as methoxy, ethoxy and n-butoxy; aryloxy groups having 6 to 20 carbon atoms such as phenoxy, 2,6-dimethylphenoxy and naphthyloxy; alkyl groups having 1 to 20 carbon atoms such as methyl, ethyl, n-propyl, iso-propyl, n-butyl, n-octyl and 2-ethylhexyl; aryl groups, alkylaryl groups or arylalkyl groups each having 6 to 20 carbon atoms such as phenyl, p-tolyl, benzyl, pentafluorophenyl, 4-tert-butylphenyl, 2,6-dimethylphenyl, 3,5-dimethylphenyl, 2,4-dimethylphenyl, and 2,3-dimethylphenyl; halogen-substituted hydrocarbon radicals having 1 to 20 carbon atoms include p-fluorophenyl, 3,5-difluorophenyl, pentachlorophenyl, 3,4,5-trifluorophenyl, pentafluorophenyl and 3,5-di(trifluoromethyl)phenyl; halogen atoms such as F, Cl, Br and I and organometalloid groups such as pentamethylantimony group, trimethylsilyl group, trimethylgermyl group, diphenylarsinyl group, dicyclohexylantimonyl group and diphenylboryl group. Specific examples of $R^7$ and $R^{10}$ are as previously enumerated. Specific examples of substitued cyclopentadienyl gorup in $R^8$ and $R^9$ include alkyl group-substituted cyclopentadienyl groups such as methylcyclopentadienyl, butylcyclopentadienyl and pentamethylcyclopentadienyl, where the alkyl groups have usually 1 to 6 carbon atoms and the number of the substituted alkyl groups are selected from the integers of 1 to 5.

The compound represented by the general formula (VI) or (VII) is preferably a compound in which $M^3$ or $M^4$ is boron, and enumerated, as preferably usable one of the general formula (VI) by triethylammonium tetraphenylborate, tri(n-butyl)ammonium tetraphenylborate, trimethylammonium tetraphenylborate, tetraethylammonium tetraphenylborate, methyltri(n-butyl)ammonium tetraphenylbroate, benzyltri(n-butyl)-ammonium tetraphenylborate, dimethyldiphenylammonium tetraphenylborate, methyltriphenylammonium tetraphenylborate, trimethylanilinium tetraphenylborate, methylpyridinium tetraphenylborate, benzylpyridinium tetraphenylborate, methyl(2-cyanopyridinium) tetraphenylborate, trimethylsulfonium tetraphenylborate, benzylmethylsulfonium tetraphenylborate, triehtylammonium tetra(pentafluorophenyl)borate, triphenylammonium tetra(pentafluorophenyl)borate, tetrabutylammonium tetra(pentafluorophenyl)borate, tetraethylammonium tetra(pentafluorophenyl)borate, methyltri(n-butyl)ammonium tetra(pentafluorophenyl)-borate, benzyltri(n-butyl)ammonium tetra(pentafluorophenyl)borate, methyldiphenylammonium tetra-(pentafluorophenyl)borate, methyltriphenylammonium tetra(pentafluorophenyl)borate, dimethyldiphenylammonium tetra(pentafluorophenyl)borate, anilinium tetra(pentafluorophenyl)borate, methylanilinium tetra-(pentafluorophenyl)borate, dimethylanilinium tetra(pentafluorophenyl)borate, trimethylanilinium tetra-(pentafluorophenyl)borate, dimethyl(m-nitroanilinium) tetra(pentafluorophenyl)borate, dimethyl(p-bromoanilinium) tetra(pentafluorophenyl)borate, pyridinium tetra(pentafluorophenyl)borate, p-cyanopyridinium tetra(pentafluorophenyl)borate, N-methylpyridinium tetra(pentafluorophenyl)borate, N-benzylpyridinium tetra(pentafluorophenyl)borate, o-cyano-N-methylpyridinium tetra(pentafluorophenyl)borate, p-cyano-N-methylpyridinium tetra(pentafluorophenyl)borate, p-cyano-N-benzylpyridinium tetra-(pentafluorophenyl)borate, trimethylsulfonium tetra(pentafluorophenyl)borate, bensyldimethylsulfonium tetra-(pentafluorophenyl)borate, teraphenylphosphonium tetra(pentafluorophenyl)borate, dimethylanilinium tetra-(3,5-di-trifluoromethylphenyl)borate and triethylammonium hexafluoroarsenate.

Examples of the compound of the general formula (VII) include ferrocenium tetraphenylborate, silver tetraphenylborate, trityl tetraphenylborate, (tetraphenylporphyrin manganate) tetraphenylborate, ferrocenium tetra(pentafluorophenyl)borate, decamethylferrocenium tetra(pentafluorophenyl)borate, acetylferrocenium tetra(pentafluorophenyl)borate, formylferrocenium tetra(pentafluorophenyl)borate, cyanoferrocenium tetra-(pentafluorophenyl)borate, silver tetra(pentafluorophenyl)borate, trityl tetra(pentafluorophenyl)borate, lithium tetra(pentafluorophenyl)borate, sodium tetra(pentafluorophenyl)borate, (tetraphenylporphyrin manganate) tetra(pentafluorophenyl)borate, (tetraphenylporpyrinium chloride) tetra(pentafluorophenyl)borate, (tetraphenylporphyrin zincate) tetra(pentafluorophenyl)borate, silver tetrafluoroborate, silver hexafluoroarsenate and silver hexafluoroantimonate.

As the compound other than that represented by the general formula (VI) or (VII), there are usable, for example, tri(pentafluorophenyl)boron, tri[3,5-di(trifluoromethyl)phenyl]boron and triphenylboron.

Examples of the organoaluminum compound as the component (C) include the compound represented by the general formula (VIII)

$R^{12}{}_{r}AlQ_{3-k}$ (VIII)

wherein $R^{12}$ is a hydrocarbon radical such as an alkyl group, alkenyl group or arylalkyl group each having 1 to 20, preferably 1 to 12 carbon atoms, Q is a hydrogen atom, an alkoxy group having 1 to 20 carbon atoms or halogen atom, and r satisfies $1 \leqq k \leqq 3$; the chain aluminoxane represented by the general formula (IX)

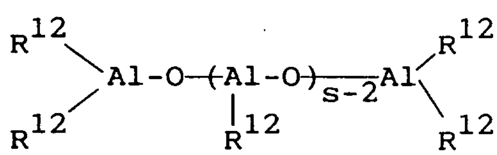

(IX)

wherein $R^{12}$ is as defined above and s is degree of polymerisation indicating an integer usually ranging from 3 to 50, preferably 7 to 40; and the cyclic alkylaluminoxane represented by the general formula (X).

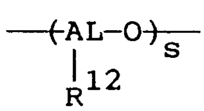

(X)

wherein $R^{12}$ and s are as defined above.

Among the compounds represented by any of the above-mentioned formulae (VIII), (IX) and (X), are desirable an alkyl group-containing aluminum compound having at least one alkyl group, especially branched alkyl group, having at least 3 carbon atoms and an aluminoxane, and are particularly desirable triisobutylaluminum and an aluminoxane having 7 or more degree of polymerization, the use of which alone or in combination with one another can afford a high catalytic activity.

A process for producing the above-mentioned aluminoxane is exemplified by but not limited to a process in which an alkylaluminum is brought ito contact with a condensation agent such as water. In addition, any of the publicly known method is available, which is exemplified by (1) a method in which an organoaluminum compound is dissolved in an organic solvent and then brought into contact with water, (2) a method in which an organoaluminum compound is first added to the reaction system at the time of polymerization and thereafter water is added thereto, (3) a method in which an organoaluminum compound

is reacted with the water of crystallization contained in metallic salt and (4) a method in which a tetraalkyldialuminoxane is reacted with a trialkylaluminum and further with water.

Specific examples of the compound represented by the general formula (VIII) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride and ethylaluminum sesquichloride.

The copolymerization catalyst to be used in the production of the copolymer according to the present invention as described hereinbefore may be in any form such as (1) the catalyst prepared by adding each of the components (A), (B) and (C) separately to the reaction system; (2) the reaction product obtained by reacting in advance the components (A), (B) and (C) through contact among them; and the catalyst supported on a proper carrier as described hereinbefore.

With regard to the usage of each of the components in the aforestated case (1), that is, the separate addition of each component, it is desirable to set the component (A) at 0.0001 to 5, preferably 0.001 to 1 mmol/liter, the component (B) at 0.0001 to 5, preferably 0.001 to 1 mmol/liter, the component (C) at 0.01 to 500, preferably 0.05 to 100 mmol/liter expressed in terms of Al atom, (B)/(A) molar ratio at 0.01 to 100, preferably 0.5 to 10 and (C)/(A) molar ratio at 0.1 to 2000, preferably 5 to 1000.

In the aforesaid case (2) where the components (A), (B) and (C) are brought into contact with each other in an inert solvent and an inert gas atmosphere, it is desirable to set the component (A) at 0.01 to 100 mmol/liter, the component (B) at 0.01 to 100 mmol/liter and the component (C) at 0.1 to 1000 mmol/liter expressed in terms of Al atom. The resultant product is remarkably improved in its catalytic copolymerisation activity when the following relations are simultaneously satisfied:

$0.5<[B]/[A]<5$

$0.5<[C]/[A]<500$ and

$0.1$ mmol/liter$<[A]$

wherein [A],[B] and [C] are each molar concentration of the components A, B and C, respectively, in the contact field, provided that [C] is expressed in terms of Al atom.

A [B]/[A] ratio less than 0.5 results in failure to manifest the effect on the improvement in the catalytic activity, whereas that more than 5 leads to the wasteful consumption of the component (B). A [C]/[A] ratio less than 0.5 results in insufficient effect on the improvement in the catalytic activity, while that more than 500 leads to the wasteful consumption of the components (C) and a large amount of aluminum components remaining in the product polymer. A concentration [A] less than 0.1 mmol/liter brings about a low rate of the contact reaction causing difficulty in sufficiently exerting the effect on the improvement in the catalytic activity.

There is favorably usable, in particular, among the component (A), a compound having a transition metal selected from the group IVB of the Periodic Table, that is, a metal selected from titanium, zirconium and hafnium as component (D), which is exemplified by the compound represented by the general formula (I), (II) or (III) or derivatives thereof and the compound represented the general formula (IV) or derivatives thereof.

The usable carrier is not specifically limited in its type, but may be an inorganic oxide carrier, an inorganic carrier other than oxide or an organic carrier and particularly desirably an inorganic oxide carrier or an inorganic carrier other than oxide.

Specific examples of the inorganic oxide carrier include $SiO_2$, $Al_2O_3$, MgO, $ZrO_2$, $TiO_2$, $Fe_2O_3$, $B_2O_3$, CaO, ZnO, BaO, $ThO_2$ and a mixture thereof such as silica/alumina, zeolite, ferrite and glass fiber, among which are particularly desirable $SiO_2$ and $Al_2O_3$. In addition, the above-mentioned inorganic oxide catalyst may contain a small amount of a carbonate, nitrate, sulfate or the like.

Other examples of the usable inorganic carrier other than oxide include magnesium compound such as $MgCl_2$, $Mg(OC_2H_5)_2$, a complex thereof and an organomagnesium compound such as $MgR^{13}{}_xX^1{}_y$ wherein $R^{13}$ is an alkyl group having 1 to 20 carbon atoms, an alkoxy group having 1 to 20 carbon atoms or an aryl group having 6 to 20 carbon atoms; $X^1$ is a halogen atom or an alkyl group having 1 to 20 carbon atoms; x is 0 to 2; and y is 0 to 2.

Examples of the organic carrier include polymers such as polystyrene, polyethylene, polypropylene, substituted polystyrene and polyarylate, starch and carbon.

The carrier (E) to be employed varies in its properties depending upon the type and preparation method, but has an average particle size in the range of usually 1 to 300 $\mu$m, desirably 10 to 200 $\mu$m, more desirably 20 to 100 $\mu$m.

Undersized particles unfavorably increase fine powders in the polymer, whereas oversized particles unfavorably increase coarse grains therein, causing decrease in bulk density and clogging of a hopper.

The specific surface area of the carrier is usually 1 to 1000 $m^2/g$, preferably 50 to 500 $m^2/g$, and the pore volume thereof is usually 0.1 to 5 $cm^3/g$, preferably 0.3 to 3 $cm^3/g$, which are determined from the volume of nitrogen absorbed in accordance with BET method. (refer to Journal of the American Chemical Society, vol 60 , page 309, 1983). Any of the specific surface area and the pore volume that is outside the above-mentioned range can cause deterioration of the catalytic activity. The above-mentioned carrier is preferably calcined or fired at usually 150 to 1000 °C, preferably 200 to 800 °C prior to use.

In the production of the ethylenic copolymer of the present invention by the use of the above-described starting materials together with the components (B) and (D) and the carrier (E), the components (D) and/or (B) are/is supported on the carrier (E).

The method for supporting the components (D) and/or (B) on the carrier (E) is not specifically limited, but is exemplified by the method (1) to (6) as described hereunder.

(1) A method in which the components (D) and/or (B) and/is mixed with the component (E).

(2) A method in which the carrier (E) is treated with an organoaluminum compound or a halogen-containing silicon compound and thereafter mixed with the components (D) and/or (B) in an inert solvent.

(3) A method in which the carrier (E) and the components (D) and/or (B) are reacted with an organoaluminum compound or a halogen-containing silicon compound.

(4) A method in which the component (D) or (B) is supported on the carrier (E) and then mixed with the component (B) or (D).

(5) A method in which the contact reaction product of the component (D) with the component (B) is mixed with the carrier (E).

(6) A method in which the carrier (E) is allowed to coexist in the contact reaction of the component (D) with the component (B).

In the above-mentioned method (4) to (6), the component (C) may be added to the reaction system.

The catalyst thus obtained may be taken out as a solid for use in the copolymerization after distilling away the solvent or may be used as such.

It is also possible to produce the catalyst by carrying out the procedure of supporting the components (D) and/or (B) or the carrier (E) in the copolymerization system, which is exemplified by a method wherein an inert solvent is placed in an autoclave and incorporated with the components (D) and/or (B) and the carrier (E) and, as necessary the component (C), and further with an olefin such as ethylene at 1 to 21 bar (0 to 20 $kg/cm^2G$) to carry out preliminary polymerization at -20 to 100 °C for one (1) min. to 2 hours and form catalyst powders.

In the copolymerization by the use of the components (B) and (D) and the carrier (E), the mixing ratio by weight of the component (B) or (D) to the carrier (E) is usually 1:5 to 1:10,000, preferably 1:10 to 1:500. A ratio outside the above-specified range may cause deteriorated catalytic activity.

The catalyst thus prepared has an average particle size in the range of usually 2 to 200 $\mu m$, desirably 10 to 150 $\mu m$, more desirably 20 to 100 $\mu m$. An average particle size smaller than 2 $\mu m$ may increase fine powders in the copolymer, whereas that larger than 200 $\mu m$ may increase coarse grains therein. The specific surface area of the catalyst is usually 20 to 1000 $m^2/g$, preferably 50 to 500 $m^2/g$. A specific surface area thereof less than 20 $m^2/g$ may give rise to deterioration of the catalytic activity, whereas that more than 1000 $m^2/g$ may bring about decrease in bulk density of the copolymer.

The amount of the transition metal per 100g of the carrier in the catalyst according to the present invention is usually 0.05 to 10g, preferably 0.1 to 2g. An amount outside the above range may cause deterioration of the catalytic activity.

The copolymerization method in the present invention is not specifically limited, but is usually any of slurry, gas-phase, bulk, solution or suspension copolymerization method, etc., of which are preferable slurry copolymerization method and gas-phase copolymerization method.

The copolymerization temperature is usually -100 to 250 °C, desirably -50 to 200 °C, particularly desirably 0 to 130 °C. Regarding the amount of the catalyst to be used based on the starting raw material, the raw monomer/the comonent (A) or (D) molar ratio or the raw monomer/the component (B) molar ratio is usually 1 to $10^8$, desirably 100 to $10^5$. The copolymerization time is usually 5 min. to 10 hours, desirably 5 to 120 min. The polymerization pressure is 1 to 102 bar (0 to 100 $kg/cm^2G$), desirably 1 to 82 bar (0 to 80 $kg/cm^2G$).

The modification of the molecular weight of the ethylenic copolymer may be carried out by selecting the usage of each of the catalytic components, copolymerization temperature and the copolymerization atmosphere such as the presence of hydrogen.

The copolymerization solvent, when used, is not specifically limited but may be selected from aromatic hydrocarbons such as benzene, toluene, xylenes and ethylbenzene; alicylic hydrocarbons such as cyclopentane, cyclohexane and methylcyclohexane; aliphatic hydrocarbons such as pentane, hexane,

heptane and octane; and halogenated hydrocarbons such as chloroform and dichloromethane, alone or as combination of at least two of them. In addition, an olefinic monomer such as an $\alpha$-olefin may be used as a solvent. The copolymerization may be performed in the absence of a solvent.

In the process of the present invention, a preliminary polymerization may be carried out using the above-mentioned catalyst through the use of a conventional technique by bringing a small amount of an olefin into contact with a solid catalyst component.

The olefin to be employed in the preliminary polymerizaiton is not specifically limited, but is exemplified by the same as the above such as ethylene, an $\alpha$-olfin having 3 to 20 carbon atoms and a mixture thereof, preferably the same olefin as that to be used in the main copolymerization.

The preliminary polymerisation is carried out at a temperature of usually -20 to 100 °C, desirably -10 to 70 °C, particularly desirably 0 to 50 °C, in the absence or presence of a solvent such as an inert hydrocarbon and an aliphatic hydrocarbon, an aromatic hydrocarbon and a monomer, particularly desirably an aliphatic hydrocarbon.

The preliminary polymerization product has an intrinsic viscosity [$\eta$] as measured in decalin at 135 °C of desirably 0.2 dl/g or higher, particularly desirably 0.5 dl/g or higher. The ratio of the preliminary polymerization product to 1 mmol of the transition metal component in the catalyst is adjusted to desirably 1 to 10,000 g, particularly desirably 10 to 1000 g.

The ethylenic copolymer of the present invention thus obtained is lessened in low and high branching components in spite of its having a wide distribution of molecular weight, excellent in fluidity, extrusion characteristics, melt elasticity and moldability such as molding stability and can be made into a film having surpassing transparency and heat sealability. Consequently, the aforesaid ethylenic copolymer, especially linear low density polyethylene can be effectively utilized for film, packing materials, heat insulating materials, foaming materials and the like.

The ethylenic copolymer composition according to the present invention comprises (a) the above-mentioned ethylenic copolymer and (b) a specific ethylene/$\alpha$-olefin copolymer as principal components.

The ethylenic copolymer as the component (a) has already been described with respect to its physical properties, starting material and process for producing the same. It is preferable, however, to employ the component (a) which belongs to the ethylene/$\alpha$-olefin copolymer when it is mixed with the component (b). The ethylenic copolymer of the present invention which comes under the category of the ethylene/$\alpha$-olefin copolymer may be produced by the use of the starting material same as that for the production of the component (b). Particularly desirable reaction conditions therein include a polymerization time of 10 min to 5 hours and a reaction pressure of 1 to 31 bar (0 to 30 $kg/cm^2G$). It is also preferable to define the parameters including melt index (MI) to the respective ranges as described hereunder.

(1)' Melt index (MI)

The MI of the ethylenic copolymer to be used as the component (a) is desirably 0.3 to 15 g/10min , more desirably 0.5 to 13 g/10min. An MI thereof of less than 0.3 g/10min or more than 15 g/10min leads to deteriorated compatibility with other resins.

(2)' Density

The density of the ethylenic copolymer to be used as the component (a) is 0.890 to 0.910 g/ml. A density of less than 0.890 may bring about deterioration of the rigidity of the product, whereas that more than 0.910 g/ml makes it difficult to attain the effect on improvement.

(3)' Molecular weight distribution (Mw/Mn)

The Mw/Mn of the ethylenic copolymer to be used as the component (a) is 2 to 5, preferably 2.5 to 4.5. As described hereinbefore an Mw/Mn of less than 2 brings about increased resin pressure, deteriorated extrusion characteristics, lowered melt elasticity, unstabilized molten-resin and worsened moldability, whereas that more than 5 results in failure to attain favorable physical properties because of unreasonable increase in both high molecular components and low molecular components.

(4)' Width for dependence of number of branches on molecular weight.

There is no additional limitative condition regarding this parameter.

(5)' ODCB soluble portion

There is no additional limitative condition regarding this parameter.

(6)' Maximum melting point (Tm(max)) as measured with a differential scanning calorimeter (DSC) --

The Tm(max) of the ethylenic copolymer to be used as the component (a) is desirably 115 °C or lower, more desirably 113 °C or lower, and when it exceeds 115 °C, the effect on the improvement in transparency and heat sealability of the film is lowered.

On the other hand, the ethylene/α-olefin copolymer as the component (b) shall have the following physical properties (1)", (2)", (6)" and (7)".

(1)" Melt index (MI)

The measuring conditions for MI are in accordance with JIS K-7210. The MI of the ethylene/α-olefin copolymer as the component (b) is 0.1 to 25 g/10min, preferably 0.5 to 15 g/10min. An MI thereof of less than 0.1 g/10min results in deterioration of extrusion characteristics and product appearance, whereas more than 25 g/10min leads to unstable moldability due to decrease in viscosity.

(2)" Density

The measuring conditions for density are in accordance with JIS K-6760 by by the density gradient tube method without annealing.

The density of the ethylene/α-olefin copolymer of as the component (b) is 0.900 to 0.940 g/ml, preferably 0.910 to 0.935 g/ml. A density of less than 0.900 will cause the problem of limpness, whereas more than 0.940 g/ml gives rise to decrease in thrust strength and impact strength of the film to be formed.

(6)" Maximum melting point (Tm(max)) as measured with a differential scanning calorimeter (DSC) --

With regard to the measuring conditions for Tm(max), 10 mg/ml of sample was maintained at 190 °C for 3 min, cooled to 25 °C at a temperature fall rate of 10 °C/min, maintained at 25 °C for 3 min and then heated to 140 °C at a temperature rise rate of 10 °C/min to obtain Tm(max), which is an index indicating the extent of the low branching components and increases with increase in such components. As the measuring instruments, DSC-7 series TAS (produced by Perkin Elmer Corp.) was used.

The Tm(max) of the ethylene/α-olefin copolymer as the component (b) is 110 to 130 °C, preferably 115 to 128 °C. A Tm(max) lower than 110 °C causes tackiness and deteriorated anti-blocking performance, whereas one higher than 130 °C results in increase in low branching components and difficulty in exerting sufficient effect on improvement in the properties.

(7)" Number of branches

The number of branches in an α-olefin having 3 to 10 carbon atoms as the sample was determined by $^{13}C$-NMR analysis.

The number of branches in the ethylene/α-olefin copolymer as the component (b) is 10 to 40/1000 carbon atoms, preferably 13 to 30/1000 carbon atoms.

The ethylene/α-olefin copolymer as the component (b) of the present invention can be produced by a variety of known processes by the use of ethylene, ethylene with at least one α-olefin and/or a non-conjugated diene having a terminal olefin as starting raw material. Specifically, ethylene may be used alone or in combination with at least one other α-olefin or at least one non-conjugated diene having a terminal olefin or in combination with both at least one other α-olefin and at least one non-conjugated diene having a terminal olefin.

Examples of the α-olefin other than ethylene include straight-chain monoolefins exemplified by propylene; 1-butene; 1-hexene; 1-octene; 1-nonen; 1-decene; 1-undecene; and 1-dodecene, branched monoolefins exemplified by 3-methylbutene-1, 3-methylpentene-1; 4-methylpentene-1; 2-ethylhexene-1; and 2,2,4-trimethylpentene-1 and monoolefins replaced with a benzene ring such as styrene.

Examples of the non-conjugated dienes having a terminal olefin, which is preferably a straight chain or branched non-conjugated diene having a terminal olefin each having 6 to 20 carbon atoms include 1,5-hexadiene; 1,6-heptadiene; 1,7-octadiene; 1,8-nonadiene; 1,9-decadiene; 2,5-dimethyl-1,5-hexadiene; and

1,4-dimethyl-4-tert-butyl-2,6-heptadiene, polyenes such as 1,5,9-decatriene and end-methylene series cyclic dienes such as 5-vinyl-2-norbornene.

The catalyst to be used therein is not limited but is exemplified by a variety of catalysts including, for example, the preparation of a magnesium compound, an aluminum compound and a transition metal compound.

The above-mentioned magnesium compound is exemplified by the known compound (JP-A-2-142807 (1990))

represented by the general formula

$MgY^1{}_fHal_{2-f}$

wherein $Y^1$ is an alkyl group, an alkoxy group, a cycloalkyl group, an alkylaryl group, an aryl group, an aryloxy group, an aralkyl group or an arylalkoxy group each having 1 to 18 carbon atoms; Hal is a halogen atom; and f is a real number of 0 to 2.

The magnesium compound may be used alone or in combination with at least one other one.

The aluminum compound is exemplified by the known compound (JP-A-2-142807 (1990))

represented by the general formula

$Y^2{}_{3-g}AlHal_g$
$Y^2{}_{3-h}Al(OY^3)Hal_h$
$Y^2{}_3Al_2Hal_3$

wherein $Y^2$ and $Y^3$, independently of one another, are each an alkyl group or an aryl group each having 1 to 20 carbon atoms; Hal is as previously defined; g is 0, 1 or 2; and h is 0 or 1.

The aluminum compound may be used alone or in combination with at least one other one.

As the transition metal compound, mention may be made of titanium, vanadium and zirconium compounds, of which a titanium compound is preferable and exemplified by the known compound (JP-A-2-142807 (1990))

represented by the general formula

$Ti(OY^4)_iHal_{4-i}$

wherein $Y^4$ is an alkyl group a cycloalkyl group, an aryl group or an aralkyl group each having 1 to 10, preferably 1 to 6 carbon atoms; Hal is as previously defined; and i is a real number indicating the average value of mixed titanium compounds and satisfying the relation $0 \leqq i \leqq 4$.

The titanium compound may be used alone or in combination with at least one other one.

The method for preparing the above-mentioned catalyst is not specifically limited but is exemplified by a method wherein the polymerizable monomer, and the aforestated magnesium, aluminum and transition metal compounds are added to the reaction system in an arbitrary manner.

The polymerization may be carried out in the presence of a known activator (JP-A-2-142807 (1990)).

The copolymerization method in producing the ethylene/$\alpha$-olefin copolymer as the component (b) in the present invention is not specifically limited, but is usually any of slurry, gas-phase, bulk, solution and suspension copolymerization method of which the slurry copolymerization method and the gas-phase copolymerization method are preferred.

The copolymerization temperature is usually -20 to 300 °C, desirably 20 to 250 °C, particularly desirably 60 to 200 °C. The reaction pressure is 1 to 102 bar (0 to 100 kg/cm$^2$G), desirably 2 to 72 bar (1 to 70 kg/cm$^2$G).

With regard to the compositional ratio in the ethylenic copolymer composition of the present invention, the composition comprises 40 to 5, preferably 30 to 10% by weight of the copolymer (a) and 60 to 95, preferably 70 to 90% by weight of the copolymer (b). A copolymer (a) content exceeding 40% by weight brings about decrease in the nerve of the film, while a copolymer (b) content exceeding 95% by weight occasions deterioration of impact strength of the film and haze thereof as well as a rise in heat seal temperature.

The production of the ethylenic copolymer composition of the present invention is not limited to a specific process, but can be favorably carried out by kneading each of the components in molten state.

As the melt kneading equipment, there are usable publicly known equipment such as an open-type mixing roll, a non-open-type Banbury mixer, an extruder, a kneader and a continuous mixter. In addition, there is preferably usable a method in which an additive is added to the master batch from an $\alpha$-olefin

series resin.

As the above-mentioned additive, various ones are available and include anti-blocking agents and slipping agents as preferable additives. The anti-blocking agents are not specifically limited, but exemplified by an oxide, a fluoride, nitride, sulfate, phosphate and carbonate of a metal and a composite salt thereof and more specifically by silicon oxide, titanium oxide, zirconium oxide, aluminum oxide, aluminosilicate, zeolite, diatomaceous earth, talc, kaolinite, sericite, montomorilonite, hectorite, calcium fluoride, magnesium fluoride, boron nitride, aluminum nitride, calcium sulfate, strontium sulfate, barium sulfate, calcium phosphate, strontium phosphate, barium phosphate, calcium carbonate, strontium carbonate and barium carbonate.

The slipping agents are not specifically limited but exemplified by higher aliphatic hydrocarbons, higher fatty acids, aliphatic amides, aliphatic esters, aliphatic alcohols, and polyhydric alcohols and more specifically by liquid paraffin, natural paraffin, polyethylene wax, fluorocarbon oil, lauric acid, palmitic acid, stearic acid, isostearic acid, hydroxylauric acid, hydroxystearic acid, oleamide, lauramide, erucamide, methyl stearate, butyl stearate, stearyl alcohol, cetyl alcohol, isocetyl alcohol, ethylene glycol, diethylene glycol, fatty acid monoglyceride, etc.

An additive other than the above may be used when necessary and exemplified by antioxidant, stabilizer such as an ultraviolet absorber, antistatic agent, flame retardant, inorganic or organic filler, dyestuff and pigment.

The ethylenic copolymer composition of the present invention to be produced in the above-described manner can be molded into any of various moldings such as films and sheets by conventional molding methods.

Specific examples of the molding method include extrusion molding, injection molding, compression molding, blow molding, and rotational molding by means of a single-screw extruder, vent-type extruder, twin-screw extruder, twin-conical screw extruder, cokneader, platificator, mixtruder, planetary screw extruder, gear-type extruder or screwless extruder.

In addition, T-die molding method and inflation molding method may be applied to form films and sheets.

The ethylenic copolymer composition of the present invention to be prepared in the aforestated manner is excellent in transparency, thrust strength, tear strength, weather resistance, cold heat-sealability, heat-sealed strength, impact strength, dielectric characteristics, etc. and therefore can be utilized for a wide variety of applications including a sealant film, pallet stretch film, wrapping film for business use, agricultural film, meat packaging film, shrink film, covering material, vibration damper, pipe, medical transfusion pack, toy and so forth. In particular, the films or sheets made from the aforesaid composition can find a variety of applications in various fields such as packaging, medical treatment, agriculture and the like by virtue of its excellent balance between dynamical strength and transparency.

In the following, the present invention will be described in more detail with reference to the examples, comparative examples and preparation examples. However, the present invention shall not be limited to the examples. Examples 1 to 5 and Comparative Examples 1 to 3 relate to the ethylenic copolymer as the first objective product of the present invention, while Preparation Examples 1 to 3, Examples 6 to 9 and Comparative Examples 4 to 5 relate to the ethylenic copolymer composition as the second objective product of the present invention.

## Example 1

(1) Synthesis of dimethylanilinium tetra(pentafluorophenyl)borate

Pentafluorophenyllithium which had been prepared from 152 mmol of bromopentafluorobenzene and 152 mmol of butyllithium was reacted with 45 mmol of trichloroboron in hexane to produce tri-(pentafluorophenyl)boron as a white solid, 41 mmol thereof was reacted with 41 mmol of pentafluorophenyllithium to produce lithium tetra(pentafluorophenyl)boron as a white solid and isolated.

Then, 16 mmol of lithium tetra(pentafluorophenyl)boron was reacted with 16 mmol of dimethylaniline hydrochloride in water to obtain 11.4 mmol of dimethylanilinium tetra(pentafluorophenyl)borate ($[PhNMe_2H]$-$[B(C_6F_5)_4]$) as a white solid. It was confirmed by $^1$H-NMR and $^{13}$C-NMR analysis that the product was the objective product.

(2) Ethylene/1-octene copolymerization

A one (1) liter autoclave which had been dried and purged with nitrogen was successively charged with 500 ml of toluene, 0.6 ml of triisobutylaluminum, 6 µmol of biscyclopentadienylzirconium dichloride, and 8 µmol of dimethylanilinium tetra(pentafluorophenyl)borate as obtained in Example 1 (1). Then 37 ml of octene was added and the reaction system heated to 70°C.

Subsequently, ethylene gas was continuously fed into the system so as to attain an ethylene partial pressure of 0.5 MPa to proceed with copolymerization for 30 min. The resultant copolymer together with toluene was immersed in about 1.5 liter of methanol and the toluene was separated by filtration to obtain ethylene/1-octene copolymer by vacuum drying. The results obtained are given in Table 1. The catalyst activity was 220 kg/g•Zr.

Example 2

A one (1) liter autoclave which had been dried and purged with nitrogen was successively charged with 500 ml of toluene, 1.0 ml of triisobutylaluminum, 6 µmol of zirconium tetrachloride and 8 µmol of dimethylanilinium tetra(pentafluorophenyl)borate as obtained in Example 1 (1). Then, 40 ml of octene was added and the reaction system heated to 70°C. Subsequently, ethylene gas was continuously fed into the system so as to attain an ethylene partial pressure of 0.8 MPa to proceed with copolymerization for 60 min. The resultant copolymer together with toluene was immersed in about 1.5 liter of methanol and the toluene was separated by filtration to obtain ethylene/1-octene copolymer by vacuum drying. The results obtained are given in Table 1.

Example 3

The procedure in Example 2 was repeated to prepare an ethylene/1-octene copolymer except that 10 µmol of tetrabutoxyzirconium was used in place of zirconium tetrachloride, the amount of dimethylanilinium tetra(pentafluorophenyl)borate was changed from 8 µmol to 10 µmol, the amount of octene was changed to 25 ml and ethylene partial pressure was set to 0.9 MPa.

The resultant copolymer together with toluene was immersed in about 1.5 liter of methanol and the toluene was separated by filtration to obtain the ethylene/1-octene copolymer by vacuum drying. The results obtained are given in Table 1.

Example 4

The procedure in Example 2 was repeated to prepare an ethylene/1-octene copolymer except that 6 µmol of tetrabenzylzirconium was used in place of zirconium tetrachloride, the amount of dimethylanilinium tetra(pentafluorophenyl)borate was changed from 8 µmol to 9 µmol and the copolymerization temperature was changed to 90°C. The resultant copolymer together with toluene was immersed in about 1.5 liter of methanol and the toluene was separated by filtration to obtain the product copolymer by vacuum drying. The results obtained are given in Table 1.

Example 5

In a 200 ml of flask which had been purged with nitrogen were placed 2.5 g of γ-alumina which had been calcined at 300°C for 3 hours, 100 ml of a 0.01 mol/liter solution of bis(cyclopentadienyl)zirconium dichloride in 100 ml of toluene, 3 mmol of triisobutylaluminum (TIBA) and 2 mmol of dimethylanilinium tetrakis(pentafluorophenyl)borate to treat the resultant mixture at room temperature for 30 min. with stirring, and then toluene was distilled away under reduced pressure to afford a solid catalyst.

Subsequently, an autoclave was charged with 500 ml of toluene, 0.5 mmol of TIBA, 5 µmol of the above-obtained solid catalyst, expressed in terms of metallic zirconium, and 35 ml of octene. Ethylene gas was continuously fed into the system so as to attain an ethylene partial pressure of 0.9 MPa to proceed with copolymerization at 90°C for 30 min. The resultant copolymer together with toluene was immersed in about 1.5 liter of methanol and the toluene was separated by filtration to obtain ethylene/1-octene copolymer by vacuum drying. The results obtained are given in Table 1. The catalyst activity was 193 kg/g•Zr.

Comparative Example 1

A one (1) liter autoclave which had been dried and purged with nitrogen was successively charged with 500 ml of toluene, 0.6 µmol of biscyclopentadienylzirconium dichloride and 10 mmol of methylalumioxane. Then, 100 ml of octene was added and the reaction system heated to 60°C. Subsequently, ethylene gas was continuously fed into the system so as to attain an ethylene partial pressure of 0.7 MPa to proceed with copolymerization for 60 min. The resultant copolymer together with toluene was immersed in about 1.5 liter of methanol and the toluene was separated by filtration to obtain ethylene/1-octene copolymer by vacuum drying. The results obtained are given in Table 2.

Comparative Example 2

A one (1) liter autoclave which had been dried and purged with nitrogen was successively charged with 500 ml of hexane, 28 g of magnesium chloride anhydride and 26 mmol of titanium tetrachloride which had been pulverized with a ball mill and washed with heptane into 0.06 mmol of catalytic component and 1.2 mmol of diethylaluminum chloride. Then 40 ml of octene was added and the reaction system heated to 70°C.

Subsequently, ethylene gas and hydrogen were continuously fed into the system so as to attain an ethylene partial pressure of 0.2 MPa and hydrogen partial pressure of 0.05 MPa to proceed with copolymerization for 30 min. The resultant copolymer together with toluene was immersed in about 1.5 liter of methanol and the solvent was separated by filtration to obtain ethylene/1-octene copolymer by vacuum drying. The results obtained are given in Table 2.

Comparative Example 3

A one (1) liter autoclave which had been dried and purged with nitrogen was successively charged with 500 ml of hexane, 28 g of magnesium chloride anhydride and 29 mmol of tetrabutoxytitanium which had been pulverized with a ball mill and washed with heptane into 0.04 mmol of catalytic component and 0.8 mmol of diethylaluminum chloride.

Then, 120 ml of octene was added and the reaction system heated to 70°C.

Subsequently, ethylene gas and hydrogen were continuously fed into the system so as to attain an ethylene partial pressure of 0.2 MPa and hydrogen partial pressure of 0.08 MPa to proceed with copolymerization for 30 min. The resultant copolymer together with toluene was immersed in about 1.5 liter of methanol and the solvent was separated by filtration to obtain ethylene/1-octene copolymer by vacuum drying. The results obtained are given in Table 2.

Table 1

| | MI (g/10 min.) | Density (g/ml) | Number of branches (nos./1000C) | Mw ($x10^4$) | Mw/Mn | Width of distributed number of branches (nos./1000C) | ODCB-insoluble portion (% by wieght) | DSC Tm(max) (°C) |
|---|---|---|---|---|---|---|---|---|
| Example 1 | 2.2 | 0.908 | 16.7 | 7.7 | 2.5 | 3.7 | 1.4 | 107 |
| Example 2 | 1.7 | 0.907 | 17.0 | 9.9 | 3.9 | 3.5 | 1.7 | 105 |
| Example 3 | 2.0 | 0.916 | 6.6 | 8.2 | 4.4 | 3.0 | 2.1 | 118 |
| Example 4 | 1.8 | 0.905 | 22.0 | 9.7 | 4.0 | 3.9 | 3.0 | 100 |
| Example 5 | 0.8 | 0.908 | 14.0 | 10.0 | 3.4 | 4.1 | 3.3 | 108 |

Table 2

| | MI (g/10 min.) | Density (g/ml) | Number of branches (nos./1000C) | Mw ($x10^4$) | Mw/Mn | Width of distributed number of branches (nos./1000C) | ODCB-insoluble portion (% by wieght) | DSC Tm(max) (°C) |
|---|---|---|---|---|---|---|---|---|
| Comparative Example 1 | 1.2 | 0.910 | 12.5 | 9.9 | 2.1 | 1.6 | 7.2 | 110 |
| Comparative Example 2 | 3.0 | 0.907 | 23.8 | 8.7 | 4.5 | 5.7 | 19.8 | 124 |
| Comparative Example 3 | 0.7 | 0.905 | 26.4 | 11.0 | 3.5 | 4.0 | 12.0 | 122 |

Preparation Example 1 (ethylene/1-octene copolymer (a))

(1) Preparation of the solid catalyst

In a 500 ml flask were placed 10.0 g of γ-alumina which had been calcined at 500 °C for 3 hours, 300 ml of a 0.02 mol/liter dispersion of zirconium tetrachloride in 300 ml of toluene, 30 mmol of TIBA and 6 mmol of dimethylanilinium tetra (pentafluorophenyl)borate as obtained in Example 1 (1).

The resultant mixture was treated at room temperature for 30 min while stirring, and then the toluene was distilled away under reduced pressure to afford a solid catalyst.

(2) Preparation of the ethylene/1-octene copolymer (a)

A one (1) liter autoclave which had been dried and purged with nitrogen was charged with toluene as the solvent at 1 liter/hour, ethylene at 700 g/hour, 1-octene at 800 g/hour, the solid catalyst as prepared in (1) at 0.1 mmol/hour expressed in terms of Zr and TIBA at 2 mmol/hour to proceed with the copolymerization at 80 °C under a total pressure adjusted to 10 bar (9 $kg/cm^2G$). As a result, an ethylene/1-octene copolymer (a) was obtained at 720 g/hour at an activity of 78.9 kg/g•Zr (one gram of catalyst expressed in terms of Zr).

Preparation Example 2 (ethylene/1-octene copolymer (b1))

A one (1) liter polymerization vessel was charged continuously with ethylaluminum sesquichloride at 3.3 mmol/hour, butylethylmagnesium at 0.825 mmol/hour and a solution of tetrabutoxytitanium in n-hexane at 0.15 mmol/hour, and at the same time, with ethylene at 700 g/hour 1-octene at 850 g/hour, hydrogen at 0.14 g/hour and n-hexane at 6 liter/hour to proceed with the copolymerization at 185 °C under a pressure of 72 bar (70 $kg/cm^2G$) to produce the copolymer (b1).

Preparation Example 3 (ethylene/1-octene copolymer (b2))

The procedure in Preparation Example 1 was repeated to proceed with the copolymerization except that the feed rate of 1-octene was changed to 330 g/hour. Thus, copolymer (b2) was obtained.

Table 3

| Copolymer | MI (g/10 min.) | Density (g/ml) | Number of branches (nos./1000C) | Tm(max) (°C) | Width of Dependence of branching degree on molecular weight (nos./1000C) | Mw/Mn | ODCB-insolubl portion (% by wieght) |
|---|---|---|---|---|---|---|---|
| a | 3.6 | 0.902 | 27 | 95 | 3.9 | 4.1 | 3.0 |
| b1 | 8.1 | 0.910 | 16 | 124 | - | - | - |
| b2 | 2.2 | 0.920 | 13 | 126 | - | - | - |

Examples 6 to 9 and Comparative Examples 4 to 5

The copolymer (a) as obtained in Preparation Example 1 to 3 was dry blended with the copolymer (b1) or (b2) obtaind in the same at respective proportions given in Table 4. To the resultant blend 1500 ppm of

Irganox 1076, 1500 ppm of diatomaceous earth and 1000 ppm of erucamide were added and kneading granulated with a single extruder having a 20 mm bore size. Films were formed from the granules by T-dye method under the following conditions:
Extruder: bore size 20 mm
Molding die: width of 170 mm, gap of 0.5 mm, air gap of 60 mm
Resin temperature: 230 ° C
Chilling roll temperature: 30 ° C
Film thickness: 25 $\mu$m

Measurements of the following physical properties for the resultant molding were made with the results given in Table 4.
Tensile modulus of elasticity (kg/cm$^2$): according to JIS-Z-7113 using autograph
Tear strength (kg/cm): according to JIS-Z-1702
Film impact strength (kg•cm/cm): according to ASTM-D3430
Haze (%): according to JIS-Z-1702 using a digital haze computor (produced by Suga Testing Instruments Co., Ltd.)
Heat seal ( ° C) temperature: according to JIS-Z-1707

A test piece (4 cm x 20 cm) was heat sealed by pressure bonding under 0.5 kg/cm$^2$ pressure for one (1) second at a heat sealing width of 10 mm x 15 mm, then allowed to stand for 30 min and peeled at a tensile rate of 200 mm/min to obtain heat seal temperature at which the tension becomes 300 g.

Table 4

| | Copolymer (% by weight) | | | Tensile modulus of elasticity (kg/cm²) | Tear strength (kg·cm/cm) | | Film impact (kg cm/cm) | Haze (%) | Heat seal temperature (°C) |
|---|---|---|---|---|---|---|---|---|---|
| | a | b1 | b2 | | MD*1 | TD*2 | | | |
| Example 6 | 10 | 90 | - | 1200 | 130 | 170 | 8700 | 3.7 | 88 |
| Example 7 | 20 | 80 | - | 1100 | 140 | 160 | 9800 | 3.0 | 83 |
| Example 8 | 20 | - | 80 | 1400 | 140 | 160 | 12000 | 3.5 | 90 |
| Example 9 | 30 | - | 70 | 1200 | 140 | 150 | 11000 | 2.1 | 85 |
| Comparative Example 4 | - | 100 | - | 1300 | 120 | 160 | 5700 | 4.2 | 94 |
| Comparative Example 5 | - | - | 100 | 1500 | 130 | 180 | 9900 | 4.8 | 102 |

## Claims

1. An ethylenic copolymer characterized in that said copolymer has a melt index (MI) of 0.1 to 30 g/10min.; a density of 0.880 to 0.940 g/ml; a molecular weight distribution as defined by weight-average

molecular weight (Mw)/number-average molecular weight (Mn) ratio of 2 to 6; a width of dependence of number of branches on molecular weight of 0 to 5/1000 carbons; an orthodichlorobenzene (ODCB) soluble portion of 10% or less by weight; and a maximum melting point (Tm(max)) as measured with a differential scanning calorimeter (DSC) of 120 ° C or less.

**2.** The copolymer according to Claim 1 having a melt index (MI) of 0.3 to 25 g/10min.

**3.** The copolymer according to Claim 1 or 2 having a density of 0.890 to 0.930 g/ml.

**4.** The copolymer according to any of Claims 1 to 3 having a molecular weight distribution as defined by weight-average molecular weight (Mw)/number-average molecular weight (Mn) ratio of 2.5 to 4.

**5.** The copolymer according to any of Claims 1 to 4 having a width for dependence of number of branches on molecular weight of 0 to 4/1000 carbon atoms.

**6.** The copolymer according to any of Claims 1 to 5 having an orthodichlorobenzene (ODCB) soluble portion of 7% or less by weight.

**7.** The copolymer according to (any of Claims 1 to 6 having a maximum melting point (Tm(max)) as measured with a differential scanning calorimeter (DSC) of 118 ° C or less.

**8.** An ethylenic copolymer composition which comprises (a) 40 to 5% by weight of an ethylenic copolymer having a melt index (MI) of 0.1 to 30 g/10min a density of 0.880 to 0.940 g/ml, a molecular weight distribution as defined by weight-average molecular weight (Mw)/number-average molecular weight (Mn) ratio of 2 to 6, a width of dependence of number of branches on molecular weight of 0 to 5/1000 carbons, an orthodichlorobenzene (ODCB) soluble portion of 10% or less by weight and a maximum melting point (Tm(max)) as measured with a differential scanning calorimeter (DSC) of 120 ° C or less; and (b) 60 to 95% by weight of an ethylene/α-olefin copolymer having a melt index (MI) of 0.1 to 25 g/10min, a density of 0.900 to 0.940 g/ml, a number of branches of 10 to 40/1000 carbons and a maximum melting point (Tm(max)) as measured with a differential scanning calorimeter (DSC) of 110 to 130 ° C.

**9.** The composition according to Claim 8 wherein the ethylenic copolymer as the component (a) has a melt index (MI) of 0.3 to 15 g/10min, a density of 0.890 to 0.910 g/ml, a molecular weight distribution as defined by weight-average molecular weight (Mw)/number-average molecular weight (Mn) ratio of 2 to 5, a width of dependence of number of branches on molecular weight of 0 to 5/1000 carbons, an orthodichlorobenzene (ODCB) soluble portion of 10% or less by weight and a maximum melting point (Tm(max)) as measured with a differential scanning calorimeter (DSC) of 115 ° C or less.

**10.** The composition according to Claim 9 wherein the ethylenic copolymer as the component (a) has a melt index (MI) of 0.5 to 13 g/10min.

**11.** The composition according to Claim 9 or 10 wherein the ethylenic copolymer as the component (a) has a molecular weight distribution as defined by weight-average molecular weight (Mw)/number-average molecular weight (Mn) ratio of 2.5 to 4.5.

**12.** The composition according to any of Claims 9 to 11 wherein the ethylenic copolymer as the component (a) has a maximum melting point (Tm(max)) as measured with a differential scanning calorimeter (DSC) of 113 ° C or less.

**13.** The composition according to any of Claims 8 to 12 wherein the ethylene/α-olefin copolymer as the component (b) has a melt index (MI) of 0.5 to 15 g/10min.

**14.** The composition according to any of Claims 8 to 13 wherein the ethylene/α-olefin copolymer as the component (b) has a density of 0.910 to 0.935 g/ml.

**15.** The composition according to any of Claims 8 to 14 wherein the ethylene/α-olefin copolymer as the component (b) has a number of branches of 13 to 30/1000 numbers of carbon atoms.

16. The composition according to any of Claims 8 to 15 wherein the ethylene/α-olefin copolymer as the component (b) has a maximum melting point (Tm(max)) as measured with a differential scanning calorimeter (DSC) of 115 to 128 °C.

17. The composition according to any of Claims 8 to 16 wherein the ethylenic copolymer as the component (a) is an ethylene/α-olefin copolymer.

18. The composition according to any of Claims 8 to 17 which comprises 30 to 10% by weight of the ethylenic copolymer as the component (a) and 70 to 90% by weight of the ethylene/α-olefin copolymer as the component (b).